(19) Europäisches Patentamt
European Patent Office
Office européen des brevets

(11) **EP 3 364 213 B1**

## (12) FASCICULE DE BREVET EUROPEEN

(45) Date de publication et mention de la délivrance du brevet:
**04.08.2021 Bulletin 2021/31**

(21) Numéro de dépôt: **18153468.6**

(22) Date de dépôt: **25.01.2018**

(51) Int Cl.:
*G01S 13/93* [(2020.01)]   *G01S 13/931* [(2020.01)]
*G06K 9/00* [(2006.01)]

(54) **PROCEDE ET SYSTEME DE PERCEPTION CONTEXTUALISEE DE CORPS MATERIELS**

VERFAHREN UND SYSTEM DER KONTEXTUALISERTEN WAHRNEHMUNG VON MATERIELLEN KÖRPERN

METHOD AND SYSTEM FOR CONTEXTUALISED PERCEPTION OF MATERIAL BODIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.02.2017 FR 1751246**

(43) Date de publication de la demande:
**22.08.2018 Bulletin 2018/34**

(73) Titulaire: **Commissariat à l'Energie Atomique et aux Energies Alternatives**
**75015 Paris (FR)**

(72) Inventeur: **HEITZMANN, Frédéric**
**38240 MEYLAN (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 891 899    WO-A1-2013/087067**

- **RAKOTOVAO TIANA ET AL: "Multi-sensor fusion of occupancy grids based on integer arithmetic", 2016 IEEE INTERNATIONAL CONFERENCE ON ROBOTICS AND AUTOMATION (ICRA), IEEE, 16 mai 2016 (2016-05-16), pages 1854-1859, XP032908400, DOI: 10.1109/ICRA.2016.7487330**
- **MANUEL YGUEL ET AL: "Efficient GPU-based Construction of Occupancy Girds Using several Laser Range-finders", INTELLIGENT ROBOTS AND SYSTEMS, 2006 IEEE/RSJ INTERNATIONAL CONFERENCE ON, IEEE, PI, 1 octobre 2006 (2006-10-01), pages 105-110, XP031006221, ISBN: 978-1-4244-0258-8**
- **SCHEUNERT U ET AL: "Generalized Grid Framework for multi sensor data fusion", INFORMATION FUSION, 2008 11TH INTERNATIONAL CONFERENCE ON, IEEE, PISCATAWAY, NJ, USA, 30 juin 2008 (2008-06-30), pages 1-7, XP031931930, ISBN: 978-3-8007-3092-6**

## Description

L'invention porte sur un procédé et un système de perception et d'estimation de la position de corps matériels réalisant, de manière efficace en termes de puissance de calcul et consommation énergétique, une fusion multi-capteurs.

On entend par « corps matériel » toute substance ou objet matériel présentant une individualité et pouvant être détecté et identifié par un capteur approprié. Ainsi, sont considérés des corps matériels les objets inanimés, qu'ils soient naturels ou artificiels, les végétaux, les animaux, les êtres humains, mais aussi des particules liquides ou solides en suspension dans l'air, comme les nuages, voire des masses liquides ou gazeuses.

L'invention s'applique notamment au domaine de la navigation de robots, drones, véhicules autonomes, etc. et plus généralement à celui de la perception.

Avec l'explosion des moyens de calcul intégrables dans un robot, les applications de la robotique se sont multipliées ces dernières années, de la production industrielle à la domotique, de l'exploration spatiale et sous-marine aux drones-jouets grand public. Les tâches réalisées dans les applications robotiques se sont progressivement complexifiées, impliquant de plus en plus souvent pour les robots de pouvoir évoluer dans des environnements inconnus ; cela a rendu de plus en plus important le développement de moyens et techniques de perception, c'est-à-dire permettant la découverte et l'interprétation de l'espace environnant. Une application importante qui utilise la perception en robotique est la navigation, qui consiste à fixer un objectif de destination à un robot, et de le laisser s'y rendre en prenant soin d'éviter les obstacles inconnus et potentiellement mobiles ; le robot a alors la charge de planifier lui même sa trajectoire. Un exemple typique, faisant l'objet de recherches intenses, est la voiture autonome.

Pour permettre une connaissance de tout l'environnement en limitant au maximum les angles morts, et pour pallier un éventuel défaut d'un capteur, on a généralement recours à l'intégration de multiples capteurs. Quand plusieurs capteurs, éventuellement de types différents, couvrent le même espace, il faut pouvoir combiner l'information extraite de chacun d'entre eux : on parle alors de fusion multi-capteurs.

Il existe deux principales familles de techniques de perception : les méthodes géométriques, qui visent à identifier la géométrie des objets de l'espace environnant, et celles à base de grille d'occupation, qui visent à déterminer si un certain emplacement est occupé par un obstacle (plus généralement, par un corps matériel). L'invention relève des techniques à base de grille d'occupation.

Les fondements théoriques des méthodes de perception et de fusion multi-capteurs basées sur des grilles d'occupation sont décrits dans l'article de A. Elfes, « Occupancy grids: a stochastic spatial représentation for active robot perception » (Sixth Conférence on Uncertainty in AI, 1990). Cette publication ne s'intéresse pas à la mise en œuvre pratique des méthodes, dont une application directe nécessiterait des calculs complexes en virgule flottante.

L'article de K. Konolige « Improved occupancy grids for map building » (Autonomous Robots, 4, 351-367, 1997), celui de J. Adarve et al. « Computing occupancy grids from multiple sensors using linear opinion pools », (Proceedings - IEEE International Conférence on Robotics and Automation, 2012), celui de T. Rakotovao et al. « Real-time power-efficient intégration of multi-sensor occupancy grid on many core » (2015 International Workshop on Advanced Robotics and its Social Impact, 30 juin 2015) et celui de E. Kaufman et al. « Bayesian Occupancy Grid Mapping via an Exact Inverse Sensor Model » (2016 American Control Conférence - ACC, Boston Mariott Copley Place, 6 - 8 juillet 2016, Boston, pp. 5709 - 5716) décrivent des perfectionnements des techniques à base des grilles d'occupation. Là encore, la mise en œuvre de ces techniques nécessite un recours massif au calcul en virgule flottante.

Les documents US 2014/035775, FR 2006/050860 et DE 102009007395 décrivent des méthodes et systèmes de perception et de fusion multi-capteurs basées sur des grilles d'occupation, appliquées à la conduite autonome des véhicules terrestres. Toutes ces méthodes nécessitent, pour leur mise en œuvre, des calculs en virgule flottante.

Or, le recours au calcul en virgule flottante exige des ressources importantes en termes de puissance de calcul, qui sont difficilement compatibles avec les contraintes propres aux systèmes embarqués. Pour mémoire, le format en virgule flottante - défini par la norme IEEE 754 - représente un nombre au moyen de trois éléments : un signe (1 bit), une mantisse (23 ou 52 bits) et un exposant (8 ou 11 bits). Effectuer des calculs en utilisant des nombres représentés en virgule flottante est beaucoup plus complexe (c'est-à-dire nécessite beaucoup plus d'opérations élémentaires) qu'effectuer des calculs sur des entiers. Cela nécessite donc l'utilisation d'un processeur plus rapide et/ou d'un accélérateur matériel dédié, avec un impact défavorable en termes de coût, encombrement et consommation électrique.

L'article de T. Rakotovao et al. « Multi-Sensor Fusion of Occupancy Grids based on Integer Arithmetic» (2016 IEEE International Conférence on Robotics and Automation - ICRA, Stockholm, 16-21 mai 2016, pp. 1854 - 1859) décrit un procédé de perception et de fusion multi-capteurs basé sur une grille d'occupation, utilisant seulement des calculs sur des entiers sans pour autant introduire des erreurs par rapport aux approches ayant recours à des calculs en virgule flottante. Un tel procédé est également décrit dans la demande de brevet en France 15-58919 du 22 septembre 2015 et dans la demande internationale PCT/EP2016/072530 du 22 septembre 2016. Cette approche permet l'utilisation de dispositifs de calcul embarqués simples, ne supportant pas nécessairement les opérations en virgule flottante ; même au cas où des calculs en virgule flottante seraient supportés, elle permet de réduire la consommation énergétique du dispositif de calcul, en évitant ou limitant fortement le recours effectif à de tels calculs.

Le document WO 2013/087067 divulgue l'utilisation d'une information de position reçue de l'extérieur, par radio, pour déterminer si certaines cellules d'une grille d'occupation peuvent être considérées libres ou occupées. L'information reçue est de type binaire et ne quantifie pas une probabilité d'occupation.

L'invention vise à apporter un perfectionnement à cette méthode, et plus particulièrement à rendre plus pertinente la grille d'occupation calculée à l'aide des mesures des capteurs, sans augmenter la complexité des calculs effectués en temps réel.

Conformément à l'invention, ce but est atteint en rendant le calcul des probabilités d'occupation dépendant d'une probabilité a priori dont la valeur est fonction du contexte. Par exemple, dans le cas d'une application à la conduite autonome ou assistée, la probabilité a priori (c'est-à-dire avant toute mesure) que des obstacles soient présents à proximité d'un véhicule est plus ou moins élevée en fonction de la densité de circulation.

Par contre, la méthode décrite dans l'article précité de T. Rakotovao et al. utilise une probabilité d'occupation a priori fixe et égale à 0,5, ce qui traduit une ignorance totale du contexte. La généralisation au cas d'une probabilité a posteriori quelconque, pouvant donc changer en fonction du contexte, n'est pas évidente. Les inventeurs sont parvenus à effectuer une telle généralisation, et à constater qu'elle n'implique pas une augmentation de la complexité des calculs devant être effectués en temps réel.

La valeur de la probabilité d'occupation a priori dépendante du contexte peut être déterminée de plusieurs façons différentes. Par exemple :

- Elle peut être choisie manuellement par un utilisateur, par exemple le conducteur - ou passager - d'un véhicule.
- Elle peut être transmise à un dispositif de calcul embarqué par une station de contrôle, par exemple un centre de surveillance du trafic routier.
- Elle peut être calculée en fonction de la position et/ou de l'heure. Par exemple, en considérant toujours le cas d'une application à la conduite assistée ou autonome, la probabilité d'occupation a priori pourra être plus élevée le matin et en fin d'après-midi qu'en milieu de journée ou la nuit ; de même, elle sera raisonnablement plus élevée dans une agglomération urbaine qu'en zone rurale.
- Elle peut également être calculée à partir de mesures obtenues d'un capteur dédié. Par exemple, il peut s'agir d'un radar non directionnel, qui détecte la présence d'obstacles sans les localiser précisément.

Un objet de l'invention est donc un procédé de perception de corps matériels comportant les étapes suivantes, mises en œuvre par un ordinateur ou un circuit électronique numérique dédié :

a) Acquisition d'une pluralité de mesures de distance desdits corps matériels issues d'un ou plusieurs capteurs ;
b) Acquisition depuis un dispositif extérieur, ou calcul en fonction d'au moins un signal reçu de l'extérieur, d'au moins une valeur de probabilité d'occupation a priori des cellules d'une grille d'occupation ;
c) Application, à chaque dite mesure de distance, d'un modèle inverse du capteur correspondant sur ladite grille d'occupation fournissant une représentation spatiale discrétisée d'un environnement dudit capteur, pour déterminer une probabilité d'occupation par un corps matériel d'un ensemble de cellules de ladite grille d'occupation, chaque dit modèle inverse de capteur étant un modèle discret, associant à chaque cellule de la grille d'occupation correspondante, et pour chaque mesure de distance, une classe de probabilité choisie à l'intérieur d'un même ensemble de cardinalité finie, chaque dite classe de probabilité étant identifiée par un indice entier ; et
d) Construction d'une grille d'occupation consolidée dont chaque cellule présente une probabilité d'occupation calculée par fusion des probabilités d'occupation estimées lors de l'étape c), la probabilité d'occupation de chaque cellule de la grille d'occupation consolidée étant déterminée au moyen de calculs entiers effectués sur les indices des classes de probabilités déterminées lors de ladite étape c), et en fonction de ladite ou d'une dite probabilité d'occupation a priori.

Un autre objet de l'invention est un système de perception de corps matériels comprenant :

- au moins un premier port d'entrée pour recevoir une pluralité de signaux représentatifs de mesures de distance desdits corps matériels issues d'un ou plusieurs capteurs ;
- au moins un deuxième port d'entrée pour recevoir un signal représentatif d'au moins une valeur de probabilité d'occupation a priori des cellules d'une grille d'occupation, ou permettant son calcul ;
- un module de traitement de données configuré pour recevoir en entrée lesdits signaux et les utiliser pour construire une grille d'occupation consolidée en appliquant un procédé tel qu'énoncé ci-dessus ; et
- au moins un port de sortie pour un signal représentatif de ladite grille d'occupation consolidée.

D'autres caractéristiques, détails et avantages de l'invention ressortiront à la lecture de la description faite en référence aux dessins annexés donnés à titre d'exemple et qui représentent, respectivement :

- La figure 1, la notion de modèle « direct » d'un capteur de distance ;
- La figure 2, la notion de grille d'occupation ;
- La figure 3, la notion de modèle « inverse » d'un capteur de distance ;
- La figure 4, la discrétisation spatial d'un modèle inverse sur une grille d'occupation ;
- Les figures 5A à 5D, une méthode de choix de la résolution spatiale optimale d'une grille d'occupation ;
- Les figures 6A et 6B, divers systèmes de classes de probabilité ;
- Les figures 7A et 7B, un système de perception d'obstacles selon deux variantes d'un premier mode de réalisation de l'invention ;
- Les figures 8A et 8B, un système de perception d'obstacles selon un deuxième mode de réalisation de l'invention ; et
- La figure 9, un système de perception d'obstacles selon un troisième mode de réalisation de l'invention.

Dans la description détaillée qui suit, il sera fait référence au cas de la perception d'obstacles. Cependant, tout ce qui est décrit s'applique plus généralement à la perception de toute sorte de corps matériels.

Le plus souvent, les capteurs employés pour la navigation renseignent sur la distance des obstacles environnants ; on parle alors de capteurs de distance. Pour rendre compte de la précision d'un capteur, de son éventuelle erreur ou de sa résolution, on introduit un modèle probabiliste. L'idée est qu'une mesure en sortie du capteur n'indique pas nécessairement la distance exacte entre l'obstacle et le capteur, et que par conséquent il convient de raisonner sur la probabilité que l'obstacle soit à une distance donnée connaissant la réponse du capteur.

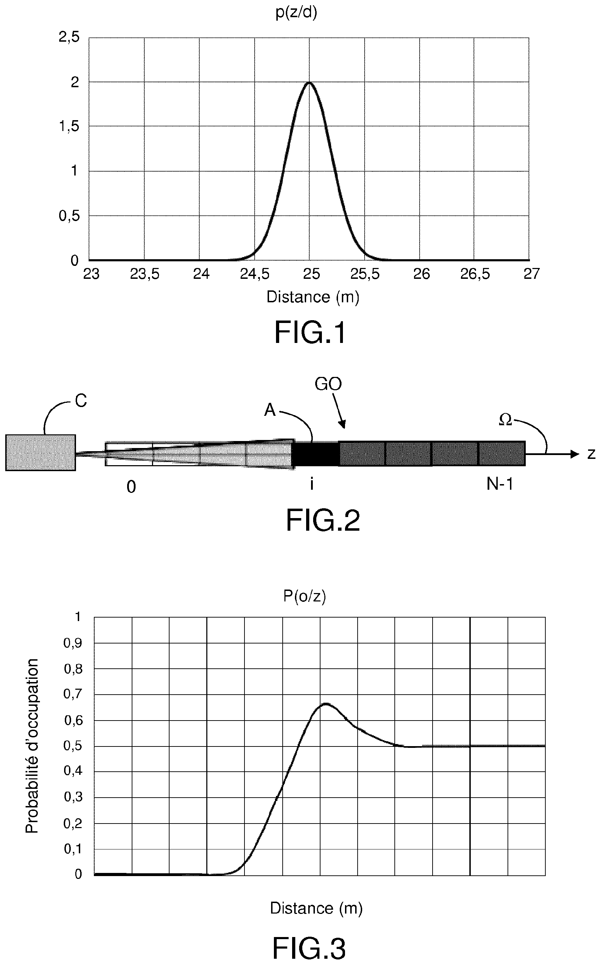

Si on note D la distance réelle entre un obstacle et le capteur, et z la sortie du capteur, on s'intéresse à la fonction de densité de probabilité conditionnelle $p(z|D)$ qui modélise le lien entre la position réelle d'un obstacle et son estimation vue par le capteur (« modèle direct »). La figure 1 présente un exemple de modèle direct d'un capteur ; on considère un espace linéaire de 50 m de long et on suppose qu'un obstacle se trouve à D=25m du capteur. Pour un capteur avec une erreur modélisable par une fonction gaussienne, la réponse z la plus probable sera proche de 25 m, mais d'autres valeurs seront possibles, avec une densité de probabilité définie par la courbe. Dans le cas d'un capteur idéal on aurait $p(z|D)=\delta(z-D)$, où $\delta$ est une Delta de Dirac, et la mesure serait toujours égale à la vraie distance. Le modèle direct d'un capteur peut être obtenu de manière expérimentale, en effectuant des séries de mesures pour une ou plusieurs distances D. Il aussi être construit de manière empirique, typiquement à partir de données fournies par le constructeur (dans le cas gaussien, la valeur de l'écart-type suffit pour décrire le modèle).

Dans la suite, on notera $\Omega$ un référentiel spatial à une, deux ou trois dimensions ; une grille d'occupation GO est une partition d'un sous-ensemble continu et borné de $\Omega$ en un nombre N de parties, dénommées cellules et désignées par un indice $i \in [0, N-1]$. On indique par $c_i$ la cellule d'indice i. Sans perte de généralité, on considèrera dans la suite une grille d'occupation monodimensionnelle observée par un seul capteur de distance C (ou une pluralité de capteurs co-localisés), l'indice i étant croissant avec l'éloignement du capteur ($c_0$ étant donc la cellule la plus proche du capteur et $c_{N-1}$ la plus éloignée). Cette configuration est illustrée par la figure 2.

Un obstacle A est un sous-ensemble continu borné de $\Omega$. On dit qu'une cellule $c_i$ est occupée par un obstacle A si $A \cap c_i \neq \varnothing$, qu'elle n'est pas occupée par A si $A \cap c_i \neq \varnothing$. En d'autres termes, si l'obstacle recouvre même partiellement la cellule, on considère qu'elle est occupée. D'autres conventions sont possibles, mais en tout cas une cellule doit être soit libre, soit occupée.

On considère pour chacune des cellules de la grille, l'expérience aléatoire binaire « état » pouvant avoir l'une des deux issues {occupée; vide} consistant à connaître si la cellule contient un obstacle ou non. On notera $e_i$ l'état de la cellule $c_i$, $o_i$ la réalisation $e_i$ = occupée et $v_i$ la réalisation $e_i$ = vide. Dans une grille, on considère que toutes les cellules sont indépendantes, de sorte que

$$\forall\ i,j \in [0,\ N-1],\ P(o_i \wedge o_j) = P(o_i) \cdot P(o_j) \qquad (1)$$

où $\wedge$ est l'opérateur logique « et » et P(.) dénote la probabilité d'un évènement (à ne pas confondre avec une densité de probabilité, désignée par un « p » minuscule). Dans la suite, dans un souci de simplicité, on remplacera « $\wedge$ » par une virgule, ainsi $P(o_i, o_j) \equiv P(o_i \wedge o_j)$.

On considère également que la position des obstacles ne peut être connue qu'à l'aide de capteurs de distance incertains, caractérisés par un modèle probabiliste tel que décrit plus haut qui peut s'écrire de manière plus générale $p(z|\vec{x})$, $\vec{x}$ étant la position d'un obstacle (en plusieurs dimensions, il s'agit d'un vecteur, exprimés en coordonnées cartésiennes, sphériques, polaires, etc. et pas d'un simple scalaire). Ces capteurs peuvent être des lasers télémétriques (appelés aussi lidars), des sonars, des radars infrarouges, des caméras à temps de vol, etc.

Une mesure z issue d'un capteur permet de déterminer la probabilité d'occupation $P(o_i|z)$ d'une cellule $c_i$. Pour une mesure z donnée, l'ensemble des probabilités $P(o_i|z) \forall i \in [0, N-1]$ constitue le modèle inverse du capteur sur la grille. Alors que le modèle direct du capteur renseigne sur la réponse du capteur en fonction du monde physique, le modèle inverse exprime l'impact de la mesure sur la grille d'occupation qui est le modèle du monde physique que l'on adopte, ce qui justifie l'appellation modèle inverse.

La figure 3 présente un exemple typique de modèle inverse d'un capteur de distance, dans un cas où z=25m. On peut vérifier que la probabilité d'occupation est quasi-nulle pour les cellules qui se trouvent à une distance inférieure à 24,25 m du capteur et atteint un pic pour une distance de 25 m (correspondant à la mesure fournie par le capteur). Au-delà de 25 m, la probabilité d'occupation diminue jusqu'à se stabiliser à une valeur de 0,5, indicative d'une méconnaissance totale de l'état d'occupation des cellules qui, étant situées au-delà de l'obstacle, sont masquées par ce dernier et donc inaccessibles au capteur.

Conformément à l'usage qui prévaut dans la littérature, la figure 3 représente le modèle inverse au moyen d'une courbe lissée. Une représentation plus correcte serait de n'afficher que les points correspondant aux limites des cellules de la grille : en effet, on ne peut pas distinguer une cellule « partiellement » occupée d'une autre qui le serait « totalement », dans tous les cas la distance à l'obstacle sera estimée comme étant la distance à la cellule correspondante. C'est là l'erreur spatiale introduite par la grille.

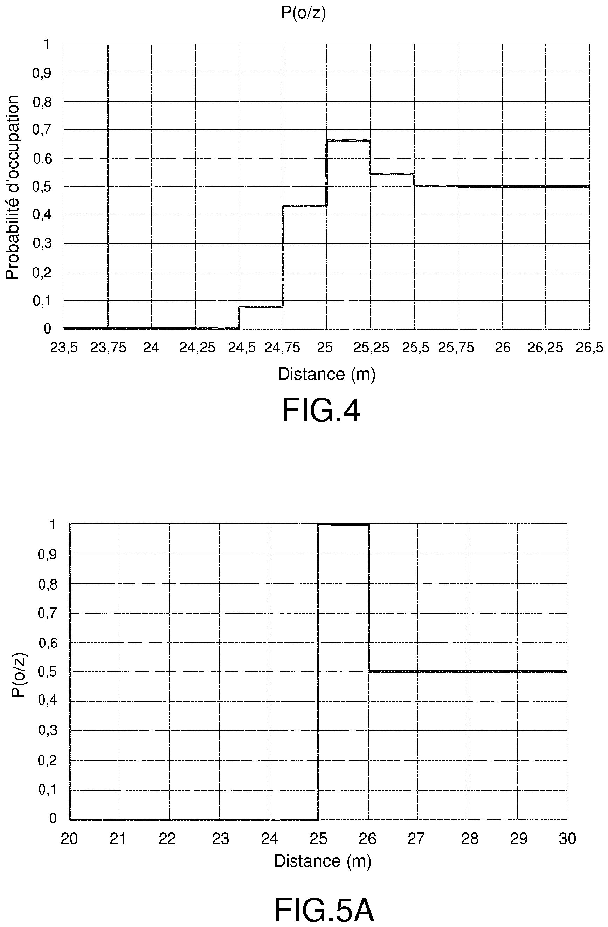

Une version plus juste du modèle inverse de la figure 3, tenant compte de cette discrétisation spatiale induite par la grille est présentée sur la figure 4.

Il convient de souligner que les notions de « occupation » et de « distance de l'obstacle » ne sont pas tout à fait équivalentes. En effet, dire qu'un obstacle est à une distance z de capteur ne signifie pas seulement qu'une certaine cellule est occupée, mais aussi que toutes les autres cellules de la grille plus proches du capteur sont libres (autrement, le premier obstacle aurait été vu à une distance inférieure à z). Sur la figure 2 précitée, l'obstacle A se trouve dans la cellule d'indice i (en noir) ; les cellules d'indice inférieur à i sont représentées en blanc pour indiquer qu'elles sont libres, celles d'indice supérieur à i le sont en gris pour indiquer que leur état d'occupation est inconnu.

Si on tient compte de la notion de capteur incertain caractérisé par son modèle (direct) $p(z|\vec{x})$ et que l'on note di la distance de la cellule $c_i$ par rapport au point de mesure et $\vec{x_l}$ le point de la cellule $c_i$ le plus proche dudit point de mesure, on a :

$$\forall i < N, p(z|\vec{x_i}) = p(z|v_0, \ldots, v_{i-1}, o_i) \qquad (2)$$

L'équation (2) indique que le modèle du capteur évalué en un point qui est à la frontière d'une cellule de la grille ($x_i$) est égal à la densité de probabilité de réponse du capteur pour une configuration de grille correspondante, à savoir une grille où les cellules les plus proches que la cellule i sont vides, la cellule i est occupée, et les états d'occupation des cellules plus éloignées que la cellule i ne sont pas déterminées. Le modèle inverse du capteur peut être construit en exploitant cette information. Une explication de ce procédé est donnée ci-dessous.

Le théorème de Bayes permet d'exprimer le modèle inverse d'un capteur P(o_i|z) de la manière suivante :

$$P(o_i|z) = \frac{p(z|o_i)P(o_i)}{p(z)} = \frac{p(z|o_i)P(o_i)}{p(z|o_i)P(o_i) + p(z|v_i)P(v_i)} \qquad (3).$$

où P(o_i) et P(v_i) désignent les probabilités a priori (c'est-à-dire sans connaitre la position des obstacles, ni la sortie du capteur) que la cellule ci soit occupée ou libre, respectivement. Dans la suite on fera l'hypothèse de probabilités a priori égales pour toutes les cellules : P(o_i)=P(o) et P(v_i)=P(v)=1-P(o) $\forall i$. Cette hypothèse permet de simplifier le calcul du modèle inverse, mais n'est nullement essentielle. Le modèle inverse reste calculable si P(o_i) n'est pas constant, pourvu que la probabilité d'occupation a priori de chaque cellule soit connue. Les calculs sont certes plus complexes, mais ne doivent être effectués qu'une seule fois, et pas en temps réel ; la complexité n'est donc pas rédhibitoire.

L'équation (3) devient alors :

$$P(o_i|z) = \frac{p(z|o_i)P(o)}{p(z|o_i)P(o) + p(z|v_i)[1-P(o)]} \qquad (4)$$

Pour pouvoir appliquer l'équation (4) et déterminer effectivement P(o_i|z), il faut préalablement calculer les termes p(z|o_i) et p(z|v_i). Pour cela on le cas d'une grille unidimensionnelle, mais la généralisation est sans difficulté. Dans le cas où la probabilité d'occupation a priori n'est pas la même pour toutes les cellules, l'équation (4) peut être généralisée sans difficulté :

$$P(o_i|z) = \frac{p(z|o_i)P(o_i)}{p(z|o_i)P(o_i)+p(z|v_i)[1-P(o_i)]} \qquad \text{(4bis)}$$

Calcul de $p(z|o_i)$

Soit « d » la première cellule occupée de la grille (0≤d<N), et $P(d_k)$ la probabilité de l'évènement d=k. On peut alors écrire :

$$p(z|o_i) = \sum_{k=0}^{N-1} p(z|d_k)P(d_k|o_i) + p(z|V)P(V|o_i)$$

$$\text{(5)}$$

où V correspond à l'événement « toutes les cellules sont vides ». Par définition $P(d_k|o_i)=0$ si k>i et $P(V|o_i)=0$, donc :

$$p(z|o_i) = \sum_{k=0}^{i} p(z|d_k)P(d_k|o_i) \qquad \text{(6)}$$

Le terme $P(d_k|o_i)$ prend les valeurs suivantes, en fonction des indices k et i :

$$\begin{cases} P(d_0|o_0) = 1 \\ P(d_0|o_i) = P(o_0) \; pour \; i > 0 \\ P(d_k|o_i) = \left[\prod_{j=0}^{k-1} P(v_j)\right]P(o_k) \; pour \; 0 < k < i \\ P(d_i|o_i) = \prod_{j=0}^{i-1} P(v_j) \\ P(d_k|o_i) = 0 \; pour \; k > i \end{cases}$$

$$\text{(7)}$$

A ce point on introduit l'hypothèse précitée de probabilités a priori égales pour toutes les cellules :

$$P(o_i)=P(o) \; et \; P(v_i)=P(v)=1\text{-}P(o) \;\; \forall i. \qquad \text{(8)}$$

En remplaçant (7) et (8) dans (6) on trouve :

$$\begin{cases} p(z|o_0) = p(z|d_0) \\ p(z|o_i) = P(o)p(z|d_0) + \sum_{k=0}^{i}[1-P(o)]^k P(o)p(z|d_k) + [1-P(o)]^i p(z|d_i) : i > 0 \end{cases}$$

$$\text{(9)}$$

Calcul de $p(z|v_i)$

De manière similaire à (6) on peut écrire :

$$p(z|v_i) = \sum_{k=0}^{N-1} p(z|d_k)P(d_k|v_i) + (z|V)P(V|v_i) \qquad \text{(10)}$$

toutefois dans (10) le deuxième terme n'est généralement pas nul.

Le terme $P(d_k|v_i)$ prend les valeurs suivantes, en fonction des indices k et i :

$$\begin{cases} P(d_0|v_0) = 0 \\ P(d_0|v_i) = P(o_0) \ pour \ i > 0 \\ P(d_k|v_i) = \left[\prod_{j=0}^{k-1} P(v_j)\right]P(o_k) \ pour \ 0 < k < i \\ P(d_i|v_i) = 0 \\ P(d_k|v_i) = \left[\prod_{j=0}^{i-1} P(v_j)\right] \cdot \left[\prod_{j=i+1}^{k-1} P(v_j)\right] \cdot P(o_k) \ pour \ k > i \end{cases} \quad (11)$$

En remplaçant (11) dans (10) et en introduisant l'hypothèse précitée de probabilités a priori égales pour toutes les cellules :

$$P(o_i)=P(o) \text{ et } P(v_i)=P(v)=1\text{-}P(o) \ \forall i. \quad (8)$$

on trouve :

$$\begin{cases} p(z|v_0) = P(o)p(z|d_1) + \sum_{k=2}^{N-1}[1 - P(o)]^k P(o)p(z|d_k) + \\ \qquad\qquad +[1 - P(o)]^{N-1}p(z|V) \\ \\ p(z|e_i) = P(o)p(z|d_0) + \sum_{k=0}^{i}[1 - P(o)]^k P(o)p(z|d_k) + \\ + \sum_{k=i+1}^{N-1}[1 - P(o)]^{k-1}P(o)p(z|d_k) + [1 - P(o)]^{N-1}p(z|V) \end{cases}$$

$$(12)$$

Pour obtenir le modèle inverse, il suffit donc de remplacer (8), (9) et (12) dans (4).

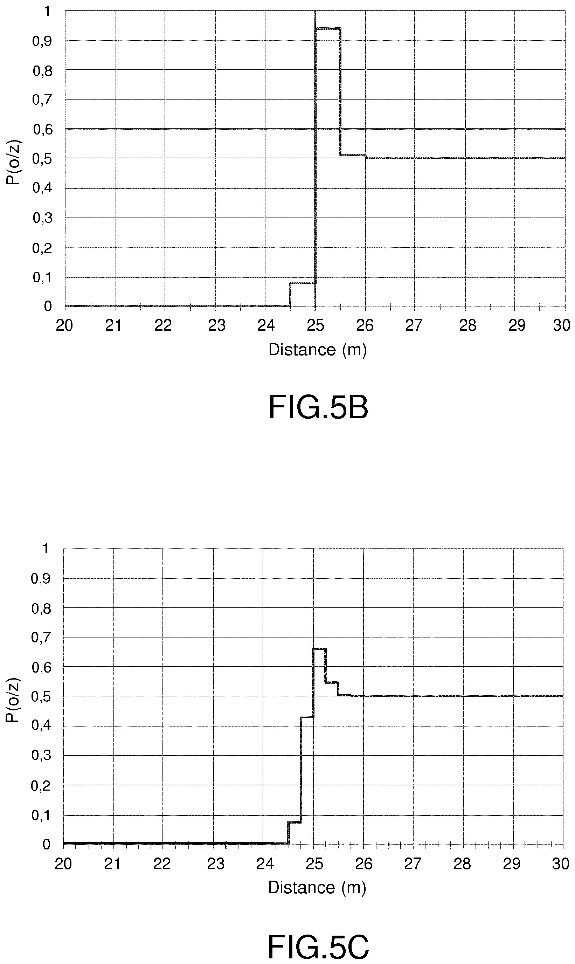

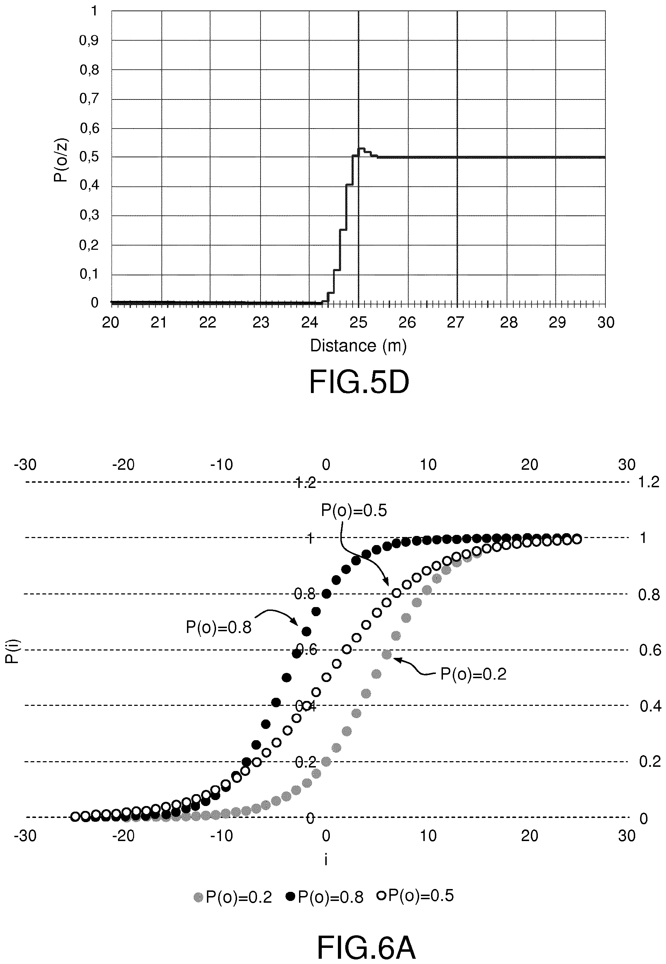

La construction du modèle inverse dépend fortement de la définition de la grille. Il est donc intéressant d'étudier quel est l'impact d'une variation de résolution spatiale sur le modèle inverse. Les figures 5A - 5D montrent les modèles inverses d'un même capteur sur quatre grilles de résolution spatiales différentes : 1 m (6A), 50 cm (6B), 25 cm (6C), 12,5 cm (5D). Ces modèles inverses ont été construits en prenant $P(o)=P(v)=0,5$. On peut remarquer que quand la résolution augmente (le pas de la grille diminue), le maximum du modèle inverse diminue et tend vers 0,5. En effet, on ne doit pas s'attendre de pouvoir connaître la position d'un obstacle avec une précision supérieure à celle du capteur. A contrario, si on se contente de connaître l'occupation avec une précision bien inférieure à celle du capteur, on pourra déterminer avec une grande certitude la présence ou l'absence d'un obstacle (cas de la figure 5A, où le maximum du modèle inverse vaut 0,999994). Ces considérations permettent d'optimiser la résolution spatiale de la grille : on peut en effet réaliser une exploration permettant de déterminer la résolution maximale de la grille pour laquelle le maximum du modèle inverse reste supérieur à un seuil (strictement supérieur à 0,5 et strictement inférieur à 1) considéré « significatif ».

A partir des modèles inverses de deux capteurs sur une même grille d'occupation, la fusion des données des deux capteurs s'effectue à l'aide de l'équation suivante :

$$P(o_i|z_1, z_2) = \frac{[1 - P(o)]P(o_i|z_1)P(o_i|z_2)}{[1 - P(o)]P(o_i|z_1)P(o_i|z_2) + P(o)P(v_i|z_1)P(v_i|z_2)}$$

$$(13)$$

où $z_1$ et $z_2$ sont les mesures fournies par les deux capteurs (la généralisation à plus de deux capteurs est immédiate - il suffit de considérer $P(o_i|z_1,z_2)$ comme le modèle inverse d'un capteur « virtuel » et le fusionner avec la mesure fournie par un troisième capteur, et ainsi de suite).

Dans le cas où la probabilité d'occupation a priori n'est pas la même pour toutes les cellules, l'équation (13) peut être généralisée sans difficulté :

$$P(o_i|z_1,z_2) = \frac{[1-P(o_i)]P(o_i|z_1)P(o_i|z_2)}{[1-P(o_i)]P(o_i|z_1)P(o_i|z_2) + P(o_i)P(v_i|z_1)P(v_i|z_2)}$$

$$(13\text{bis})$$

Appliquer directement l'équation (13) ou (13bis) à la fusion de données issues de plusieurs capteurs est difficilement envisageable dans un système embarqué, car cela nécessiterait l'exécution de nombreux calculs en virgule flottante pour chaque cellule de la grille à une fréquence au moins aussi rapide que la fréquence d'acquisition des capteurs. Une puissance de calcul importante serait dont nécessaire.

Conformément à l'approche déjà divulguée par l'article précité de T. Rakotovao et al., l'invention exploite la notion de « classes de probabilité » pour effectuer la fusion des données de plusieurs capteurs en n'utilisant que des calculs entiers.

Dans ce qui suit, on appellera « système de classes de probabilités » $S = \{p_n, n \in \mathbb{Z}\}$ un sous-ensemble dénombrable de [0; 1], dont les éléments $p_n$ peuvent donc être caractérisés par un indice entier relatif « n ». Si on appelle « F » la fonction de fusion des données exprimée par l'équation (13) ci-dessus, on peut écrire :

$$F(p_1,p_2) = \frac{[1-P(o)]\cdot p_1 \cdot p_2}{P(o)\cdot p_1 \cdot p_2 + P(o)\cdot(1-p_1)\cdot(1-p_2)} \qquad (14)$$

Dans le cas où la probabilité d'occupation a priori n'est pas la même pour toutes les cellules, l'équation (14) peut être généralisée sans difficulté :

$$F(p_1,p_2) = \frac{[1-P(o_i)]\cdot p_1 \cdot p_2}{P(o_i)\cdot p_1 \cdot p_2 + P(o_i)\cdot(1-p_1)\cdot(1-p_2)} \qquad (14\text{bis})$$

Un cas particulièrement intéressant est celui d'un système de classes tel que le résultat de la fusion de deux classes de probabilités du système appartient également au système ; formellement : $\forall\ p_i,p_j \in S,\ F(p_1,p_2) \in S$. On parle alors d'un système de classes « sans erreur », car la fusion n'introduit pas d'erreur ou d'approximation. Il est donc possible de repérer les valeurs de probabilité par les indices des classes correspondantes, et le résultat d'une fusion est également identifié par un indice. Le problème de la fusion revient alors à déterminer une fonction appropriée $F_d$ qui, à deux indices entiers, associe un autre indice entier. Formellement :

$$\forall(k,l) \in \mathbb{Z}^2, \exists\ i \in \mathbb{Z}:\ F(p_k,p_l) = p_i$$

et on note $F_d(k,l)=i.$

Le calcul de $F_d(k,l)$ ne requiert que la connaissance des indices k et l et de l'arithmétique d'indice entier ; aucun calcul en virgule flottante n'est nécessaire pour le calcul de la fusion des informations $p_k$ et $p_l$. De plus, si le système de classes est considéré sans erreur, l'indice obtenu à l'aide de $F_d(k,l)$ désigne une valeur de probabilité strictement identique à celle obtenue - en utilisant des nombres en virgule flottante - en appliquant l'équation (14). La méthode permet ainsi la fusion des classes de probabilité sans erreur par rapport à un calcul flottant.

Un exemple trivial de système sans erreur est S={1/2, 1}. Tout système de classes sans erreur comprenant des probabilités différentes de 1/2, 1 et 0 comprend nécessairement une infinité d'éléments. En pratique, pour des raisons évidentes de mise en œuvre, on uniquement des systèmes de classes de probabilités de cardinalité finie. Toutefois, étant donné que les capteurs sont en nombre fini et que leurs sorties (quantifiées et numérisées) ne peuvent prendre qu'un nombre fini de valeurs, on démontre qu'il est possible de réaliser des fusions « sans erreurs » même à partir de systèmes de classes de probabilités de cardinalité finie.

Il est important de noter que le modèle inverse de la figure 4 était discrétisé spatialement, mais la probabilité d'occupation de chaque cellule pouvait prendre n'importe quelle valeur comprise dans l'intervalle [0,1]. L'utilisation de systèmes de classes implique également une discrétisation des valeurs de probabilité. Ainsi, il est nécessaire d'approcher les valeurs de probabilité du modèle inverse de la figure 4 par des éléments d'un système de classes S.

Une première possibilité consiste à remplacer les valeurs du modèle inverse par les éléments de S les plus proches, de manière à minimiser l'erreur de quantification. Cette approche peut conduire à sous-estimer la probabilité d'occupation d'une cellule, ce qui peut ne pas être acceptable dans une application de détection d'obstacles. Une alternative consiste à approcher les valeurs du modèle inverse théorique par le plus petit majorant du système de classes S ; ainsi la probabilité d'occupation n'est jamais sous-estimée, ce qui peut être un avantage pour la détection d'obstacles. Dans d'autres applications, comme le comptage de personne, ce type d'approximation peut en revanche conduire à la génération de faux-positifs.

Quel que soit le type d'approximation considéré, le système inverse discrétisé spatialement prend un nombre de valeurs qui est très faible (de moins de 10 à quelques dizaines au plus). Par conséquent, le nombre d'éléments du système S nécessaires pour l'approcher le modèle inverse est également très faible. On peut donc se limiter à considérer un sous-ensemble fini, et de petite taille, du système de classes S dont la cardinalité est, en principe, infinie et dénombrable.

Il a été montré plus haut, en référence aux figures 5A - 5D, que - pour un capteur donné - plus la grille d'occupation spatiale est résolue, plus la valeur maximale du modèle inverse est proche de 0,5. Or, si on se limite à des valeurs de probabilité appartenant à un système de classes S, il existe une classe de probabilité $p_{min}$ qui correspond à la plus petite valeur supérieure à 0,5. La résolution optimale de la grille d'occupation est donc celle pour laquelle la valeur maximale du modèle inverse est égale à $p_{min}$. Toute diminution ultérieure du pas de la grille augmente la charge de calcul sans apporter aucun gain en termes d'information.

Un système de classes $G_p^{P(o)}$ convenant à la mise en œuvre de l'invention peut être défini par récurrence.

Soit p une probabilité d'occupation strictement comprise entre 0 et 1-P(o). On définit alors par récurrence la suite $p_n$ de la façon suivante :

$$p_0 = P(o) \; ;$$

$$p_1 = p \; ;$$

$$p_{n+1} = F(p_i, p) \; \forall n > 1$$

$$p_{-1} = \frac{P(o)^2 (1-p)}{P(o)^2 + (1-2P(o))p};$$

$$p_{n-1} = F(p_n, p_{-1}) \; \forall i < -1 \tag{15}$$

où F est la fonction de fusion définie par l'équation (14).

Dans le cas où la probabilité d'occupation a priori n'est pas la même pour toutes les cellules, le système (15) peut être généralisé sans difficulté :

$$p_0 = P(o_i) \; ;$$

$$p_1 = p \; ;$$

$$p_{n+1} = F(p_n, p) \; \forall i > 1$$

$$p_{-1} = \frac{P(o_i)^2 (1-p)}{P(o_i)^2 + (1-2P(o_i))p};$$

$$p_{n-1} = F(p_n, p_{-1}) \; \forall i < -1 \tag{15bis}$$

F étant alors définie par l'équation (14bis).

Par ailleurs le paramètre « p », qui fixe la valeur de $p_1$, peut également être différent d'une cellule à l'autre.

Par constructions, ces classes sont sans erreur. En effet, si on note $f_p$ la fonction à une variable qui, à une probabilité x, associe $f_p(x) = F(x,p)$, on voit immédiatement que $\forall n \in \mathbb{N}^*, \; p_n = f_p^n(p),$ où l'exposant « n » signifie « composé n fois avec lui-même ». Par conséquent :

$$F(p_n, p_m) = F\left(f_p^n(p), f_p^m(p)\right) = f_p^{n+m}(p) = p_{n+m}$$

$$(16)$$

La formule de fusion pour ces classes est extrêmement simple:

$$\mathrm{F_d}(n, m) = n + m \; \forall \; n, m \in \mathbb{Z} \qquad (17)$$

De plus, le paramètre p permet de contrôler finement l'erreur introduite par la quantification ; en effet si on pose p=1/2 + ε on a :

$$\mathrm{E(p)} = p_1 - p_0 = \varepsilon \qquad (18)$$

Ce système de classes $G_p^{P(o)}$ est donc très intéressant car il permet de réaliser la fusion entière de la manière la plus simple possible (une addition entière) et sans erreur, et de maîtriser l'erreur introduite par la quantification par le choix du paramètre p.

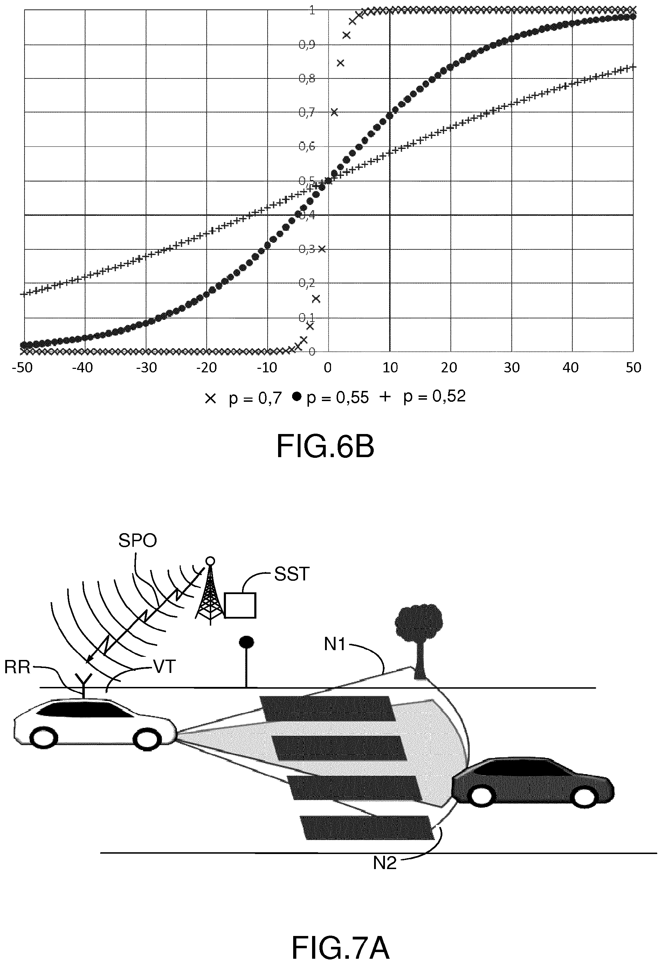

La figure 6A illustre le système de classes de probabilité $G_p^{P(o)}$ pour trois valeurs de la probabilité a priori (considérée constante pour toutes les cellules) : P(o)=0,2 - correspondant, par exemple, dans le cas d'une application automobile, à une situation de circulation peu intense ; P(o)=0,5 - correspondant à une situation de circulation d'intensité moyenne, ou inconnue ; P(o)=0,8 - correspondant à une situation de circulation intense. La figure 6B illustre le système de classes $G_p^{P(o)}$ avec P(o)=0,5 pour trois valeurs du paramètre p : 0,52 ; 0,55 et 0,7.

Le système de classes $G_p^{P(o)}$ peut également être défini de manière directe (non récursive) :

$$p_i = \frac{e^{L_i}}{1 + e^{L_i}}, i \in \mathbb{Z} \qquad (19)$$

où

$$L_i = i \cdot \left(log\left(\frac{p}{p-1}\right) - log\left(\frac{P(o)}{1-P(o)}\right)\right) + log\left(\frac{P(o)}{1-P(o)}\right) \qquad (20)$$

La figure 7A illustre l'application de l'invention à un véhicule terrestre VT équipé d'un capteur de distance C, par exemple un télémètre laser à balayage mécanique (LIDAR). Ce capteur est configuré pour effectuer une pluralité de balayages unidimensionnels de l'espace à l'avant du véhicule, chaque balayage définissant une « nappe » d'acquisition. De préférence, on réalise une pluralité de nappes N1, N2... à des hauteurs différentes. Lors de chaque balayage, le capteur produit un vecteur de mesures z, dont chacune est indicative de la présence d'un obstacle - piéton, autre véhicule, arbre sur le bord de la route ... - dans une direction respective et de sa distance (par exemple, lorsque z prend sa valeur maximale, cela signifie qu'il n'y a pas d'obstacle détecté dans la limite de portée du capteur). En variante, une pluralité de capteurs co-localisés (c'est-à-dire ayant le même point d'origine pour la mesure de la distance) peut permettre de réaliser de manière simultanée une pluralité de nappes d'acquisition.

Le véhicule VT est également équipé d'un récepteur radio RR qui reçoit un signal SPO lui permettant de déterminer la valeur de probabilité d'occupation a priori, P(o). Le signal SPO est transmis par une station de surveillance SST qui peut être un centre de contrôle du trafic ou même un équipement autonome de l'infrastructure routière. Ce signal peut directement véhiculer la valeur de P(o), ou bien un paramètre représentatif d'un état de la circulation permettant à un processeur embarqué sur le véhicule de calculer cette valeur.

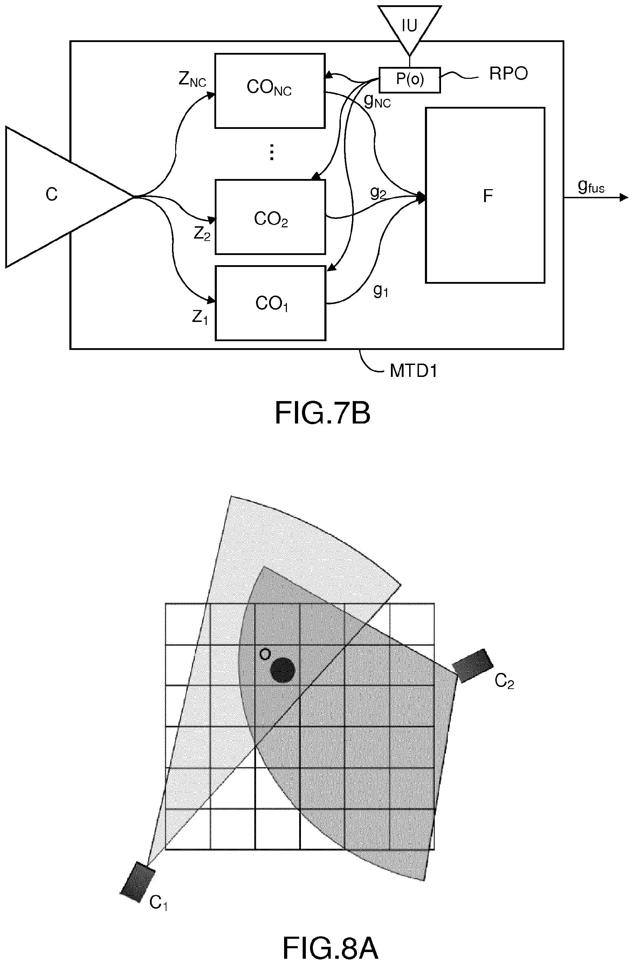

La figure 7B illustre un système de perception d'obstacles adapté à cette application. Ce système comprend ledit capteur C (ou un ensemble de capteurs colocalisés) et un module de traitement de données MTD1 recevant en entrée les vecteurs de mesures correspondant à chaque nappe d'acquisition du capteur et fournissant à sa sortie un signal (typiquement un vecteur d'entiers) représentatif d'une grille d'occupation obtenue par fusion des données de ces nappes d'acquisition.

Dans le mode de réalisation de la figure 7B, le module de traitement de données MTD1 comprend une pluralité de blocs matériels de calcul de probabilités d'occupation, $CO_1...CO_{NC}$ et un bloc matériel de calcul F dit de consolidation ou de fusion. Chaque bloc de calcul de probabilités d'occupation $CO_k$ comprend une mémoire stockant, sous la forme d'une table de correspondance, un modèle inverse de la nappe d'indice k du capteur C, discrétisé au moyen d'un système de classes de probabilité, par exemple $S_1$. On parle ici de « modèle inverse de la nappe » car ce sont les mesures des différentes nappes qu'on fusionne. Si un seul capteur est utilisé pour acquérir plusieurs nappes, ce capteur unique est en fait équivalent à une pluralité de capteurs acquérant une nappe chacun, et ayant chacun son propre modèle inverse (même si tous ces modèles inverses peuvent être identiques).

Le module de traitement des données comprend également un registre RPO permettant de stocker une valeur P(o) de la probabilité d'occupation a posteriori. Contrairement au mode de réalisation de la figure 7A, dans ce cas cette valeur est choisie par un utilisateur par l'intermédiaire d'une interface utilisateur IU. L'interface IU peut par exemple être le panneau de contrôle d'un ordinateur de bord, permettant également de régler l'autoradio, de paramétrer le navigateur, etc. Pour des raisons d'ergonomie, il est préférable que l'utilisateur ne doive pas entrer une valeur numérique ; il pourrait par exemple avoir à choisir entre un nombre fini d'état de circulation, ou à positionner un curseur sur une barre.

Chaque bloc de traitement $CO_k$ reçoit donc en entrée les mesures correspondant à une nappe d'acquisition $z_k$ (références $z_1...z_{NC}$) respective ainsi que la valeur P(o) stockée dans le registre RPO, et fournit en sortie une grille d'occupation, sous la forme un vecteur d'entiers $g_k$ représentant les indices des classes de probabilités associées aux différentes cellules de la grille. Ainsi, la grille $g_k$ renferme les informations d'occupation estimées à l'aide des mesures de la nappe k uniquement, c'est-à-dire du vecteur de mesures $z_k$.

Le bloc matériel de consolidation F est un circuit arithmétique très simple, qui met en œuvre l'équation (17). Il reçoit à son entrée les grilles d'occupation $g_1...g_{NC}$ et fournit à sa sortie une grille d'occupation « consolidée », représentée à son tour par un vecteur d'entiers, indices des classes de probabilités associées aux différentes cellules de cette grille consolidée.

Si les modèles inverses associés aux différentes nappes d'acquisition sont identiques, les blocs $CO_1 ... CO_{NC}$ sont aussi identiques, et peuvent être remplacés par un bloc matériel de calcul de probabilités d'occupation unique, effectuant les traitements de manière séquentielle.

Le module de traitement de données MTD1 peut aussi être associé à tout autre type de capteurs de distance.

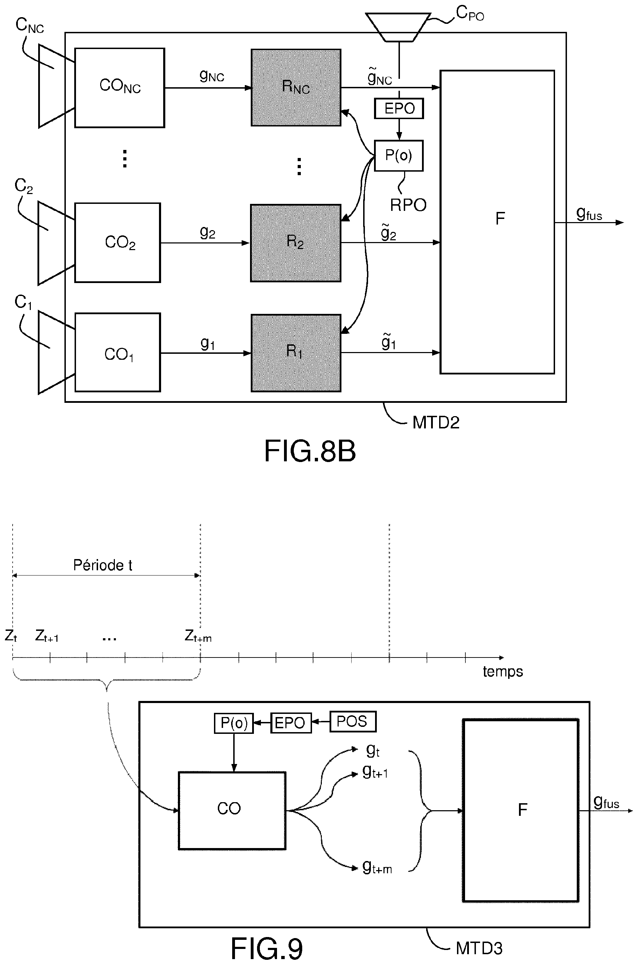

Les figures 8A et 8B se rapportent à un autre mode de réalisation de l'invention, utilisant plusieurs capteurs disposés à des emplacements différents qui coopèrent pour fournir une grille d'occupation construite à l'aide de mesures effectuées depuis différents points de vue. Les capteurs peuvent être hétérogènes technologiquement, en précision, portée, champ de vision et/ou rapidité d'acquisition. Dans ce mode de réalisation la distance du premier obstacle est une information relative au capteur qui fait la mesure. Un exemple schématique du scénario est représenté sur la figure 8A, montrant deux capteurs C1 et C2 placés à différentes positions et ayant des portées et des champs de vision différents. Ainsi l'obstacle O est vu à des distances complètement différentes par C1 et C2.

Dans ce mode de réalisation, la principale difficulté réside dans le fait que la grille d'occupation d'une part et les capteurs d'autres parts ont chacun un repère propre qui leur est associé. Ainsi, l'évaluation de l'emplacement des obstacles requiert d'effectuer des changements de repères.

La figure 8B illustre un système de perception d'obstacles selon un tel mode de réalisation de l'invention. Ce système comprend, de manière générale, « NC » capteurs non co-localisés et potentiellement hétérogènes $C_1$, $C_2$ ... $C_{NC}$ et un module de traitement de données MTD2. Ce dernier se différencie du module de traitement de données MTD1 de la figure 7B en ce qu'il comprend aussi, intercalés entre les blocs matériels de calcul de probabilités d'occupation $CO_1 ... CO_{NC}$ et le bloc matériel de consolidation F, des blocs de changement de repère $R_1 ... R_{NC}$. Chacun de ces blocs $R_k$ contient des unités de calcul, généralement en virgule flottante, pour effectuer le changement du repère d'un capteur respectif vers le repère de la grille d'occupation dite « de consolidation » par rapport à laquelle est effectuée la fusion des données. Le calcul effectué pour le changement de repère consiste à réaffecter l'occupation d'un emplacement connu dans le repère d'un capteur $C_k$ (exprimé par un vecteur d'entiers $g_k$) à la cellule correspondante dans le repère de la grille de consolidation. On représente par $\tilde{g}_1 ... \tilde{g}_{NC}$ les vecteurs d'entiers représentatifs des occupations des cellules de la grille de consolidation. Cette réaffectation suppose le calcul de translations, rotations, etc. Le traitement des blocs $R_k$ peut par exemple être réalisé en utilisant une unité arithmétique flottante d'un processeur embarqué (FPU : Floating Point Unit). Dans ce cas un même bloc matériel peut effectuer le calcul pour l'ensemble des blocs $R_k$ (traitement séquentiel).

En variante, les équations de changement de repère peuvent être mémorisées dans des tables de conversion stockées dans des mémoires contenues dans les modules $R_k$. Ainsi, même dans ce cas, on peut s'affranchir du calcul en virgule flottante et n'effectuer que des opérations sur des entiers. Par contre, ces tables de conversion peuvent être assez volumineuses et leur stockage avoir un coût non négligeable en termes de surface de silicium.

En outre, contrairement aux deux modes de réalisation précédents, la valeur de la probabilité d'occupation a priori P(o) est calculée par un processeur EPO à partir des données issues d'un capteur $C_{PO}$ distinct des capteurs $C_1$ - $C_{NC}$ fournissant les mesures z. Il peut s'agir par exemple d'un radar non directionnel, émettant une impulsion électromagnétique et comptant le nombre d'échos reçus. Plus ce nombre est important, plus la valeur de P(o) sera élevée.

La figure 9 illustre un troisième mode de réalisation de l'invention dans lequel un capteur unique C, non représenté, acquiert des mesures scalaires ou vectorielles $z_t$, $z_{t+1}$, ...$z_{t+m}$... à une cadence d'acquisition N fois plus élevée de ce qui est requis pour une application déterminée. Un bloc matériel de calcul de probabilités d'occupation CO produit une grille d'occupation $g_t$, $g_{t+1}$, ...$g_{t+m}$... pour chacune de ces mesures. Puis un bloc matériel de fusion F fusionne N de ces grilles, acquises à des instants successifs, en une seule grille consolidée $g_{fus}$ ; les grilles d'occupation consolidées $g_{fus}$ sont donc générées à une cadence N fois moins élevée que la cadence d'application du capteur. Par exemple, si le capteur C fonctionne à une cadence de 100 Hz et une cadence de 10 Hz suffit pour l'application visée, on peut fusionner 10 acquisitions successives.

Dans ce mode de réalisation, le processeur EPO calcule la valeur de probabilité d'occupation a priori P(o) en fonction du positionnement spatio-temporel du capteur, c'est-à-dire de sa position et/ou de l'heure du jour. Ces données sont fournies par un dispositif de positionnement POS, tel qu'un récepteur GPS. Comme cela a été expliqué plus haut, la connaissance de la position et/ou de l'heure permet d'estimer une densité de trafic attendue, et donc de choisir une valeur optimale de P(o).

Plus généralement, le signal reçu de l'extérieur peut être indicatif d'une densité de corps matériels dans une région d'observation du ou des capteurs (par exemple, il peut s'agir d'un niveau de densité de trafic, reçu directement ou estimé à partir du positionnement spatio-temporel des capteurs ou de leurs régions d'observation respectives), et les probabilités d'occupation a priori être calculées à partir de cette densité de corps matériels.

Différents moyens d'acquérir et/ou calculer la valeur de P(o) ont été décrits en référence à différents modes de réalisation de l'invention. Cependant, chaque mode de réalisation peut utiliser n'importe lequel de ces moyens - voire plusieurs d'entre eux. On peut même envisager d'utiliser des moyens d'acquisition ou calcul différents pour les probabiltiés d'occupation a priori de différentes cellules de la grille. En outre, les moyens décrits ne constituent nullement une liste exhaustive.

Dans les modes de réalisation des figures 7B, 8B et 9 on a considéré le cas où les traitements - ou au moins certains d'entre eux - sont réalisés par des blocs de calcul matériels, c'est-à-dire des circuits numériques dédiés. L'invention se prête cependant aussi à une mise en œuvre totalement ou partiellement logicielle, dans laquelle les traitements - ou au moins certains d'entre eux - sont réalisés par un processeur générique programmé de manière opportune.

D'autres systèmes de classes de probabilité que $G_p^{P(o)}$ peuvent être utilisés pour la mise en œuvre de l'invention. En particulier, il n'est pas essentiel que le système de classes dépende de la probabilité a priori P(o) ou P($o_i$).

**Revendications**

1. Procédé de perception de corps matériels (O) comportant les étapes suivantes, mises en œuvre par un module de traitement de données (MTD1, MTD2) :

   a) Acquisition d'une pluralité de mesures de distance ($z_1$ ... $z_{NC}$) desdits corps matériels issues d'un ou plusieurs capteurs ($C_1$ ... $C_{NC}$) ;
   b) Acquisition depuis un dispositif extérieur audit module de traitement de données, ou calcul en fonction d'au moins un signal (SPO) reçu de l'extérieur dudit module de traitement de données, d'au moins une valeur de probabilité d'occupation a priori des cellules d'une grille d'occupation ;
   c) Application, à chaque dite mesure de distance, d'un modèle inverse du capteur correspondant sur ladite grille d'occupation (GO) fournissant une représentation spatiale discrétisée d'un environnement dudit capteur, pour déterminer une probabilité d'occupation par un corps matériel d'un ensemble de cellules de ladite grille d'occupation, chaque dit modèle inverse de capteur étant un modèle discret, associant à chaque cellule de la grille d'occupation correspondante, et pour chaque mesure de distance, une classe de probabilité choisie à l'intérieur d'un même ensemble de cardinalité finie, chaque dite classe de probabilité étant identifiée par un indice entier ; et
   d) Construction d'une grille d'occupation consolidée dont chaque cellule présente une probabilité d'occupation calculée par fusion des probabilités d'occupation estimées lors de l'étape c), la probabilité d'occupation de chaque cellule de la grille d'occupation consolidée étant déterminée au moyen de calculs entiers effectués sur les indices des classes de probabilités déterminées lors de ladite étape c), et en fonction de ladite ou d'une dite probabilité d'occupation a priori.

2. Procédé selon la revendication 1 dans lequel ladite étape b) comprend l'acquisition de ladite ou d'au moins une dite valeur de probabilité d'occupation a priori par l'intermédiaire d'un dispositif d'interface utilisateur (IU).

3. Procédé selon la revendication 1 dans lequel ladite étape b) comprend l'acquisition de ladite ou d'au moins une dite valeur de probabilité d'occupation a priori par l'intermédiaire d'un récepteur radio (RR).

4. Procédé selon la revendication 1 dans lequel ladite étape b) comprend la réception d'un dit signal (SPO) reçu de l'extérieur indicatif d'une densité de corps matériels dans une région d'observation dudit ou d'au moins un dit capteur, et le calcul de ladite ou d'au moins une dite valeur de probabilité d'occupation a priori en fonction de ladite densité de corps matériels.

5. Procédé selon la revendication 1 dans lequel ladite étape b) comprend le calcul de ladite ou d'au moins une dite valeur de probabilité d'occupation a priori en fonction d'au moins un signal de présence desdits corps matériels issu d'un ou plusieurs capteurs ($C_{PO}$) autres que les capteurs utilisés pour mettre en œuvre ladite étape a).

6. Procédé selon l'une des revendications précédentes dans lequel ledit ensemble de cardinalité finie de classes de probabilité est formé par l'union d'un ou plusieurs sous-ensembles tels que, lors de ladite étape d), la fusion de deux classes de probabilité appartenant à un même sous-ensemble fournisse un résultat appartenant aussi audit sous-ensemble.

7. Procédé selon l'une des revendications précédentes dans lequel ledit ensemble de cardinalité finie de classes de probabilité, désigné par $G_p^{P(o)}$, constitue une discrétisation non uniforme de l'intervalle de probabilité [0, 1], avec un pas de discrétisation augmentant entre 0 et 0,5, puis diminuant entre 0,5 et 1 et est défini par :

$$G_p^{P(o)} = \{(p_n), n \in \mathbb{Z}\},$$ $\mathbb{Z}$ étant l'ensemble des entiers relatifs, les classes de probabilités $p_n$ étant définies de la manière suivante :

$p_0 = P(o_i);$
$P_i = P$ ;
$p_{n+1} = F(p_n, p) \ \forall n > 1$

$$p_{-1} = \frac{P(o)^2(1-p)}{P(o)^2 + (1-2P(o))p};$$

$p_{n-1} = F(p_n, p_{-1}) \forall i < -1$

où $P(o_i)$ est la valeur de probabilité d'occupation a priori de la cellule d'indice « i » de la grille d'occupation, p un paramètre de valeur strictement comprise entre 0 et $1 - P(o_i)$ et F une fonction de fusion de probabilité d'occupation ;

et dans lequel, lors de ladite étape d), la fusion entre deux classes de probabilités $p_i$, $p_j \in G_p^{P(o)}$ est calculée par application de l'équation suivante : $F(p_n, p_m) = p_{n+m}$

8. Procédé selon l'une des revendications précédentes comportant également une étape préliminaire de construction des modèles inverses d'au moins un dit capteur sur la grille d'occupation correspondante, mise en œuvre par application de l'équation suivante :

$$P(o_i|z) = \frac{p(z|o_i)P(o_i)}{p(z|o_i)P(o_i) + p(z|v_i)[1 - P(o_i)]}$$

où :

- $P(o_i|z)$ représente la probabilité d'occupation de la cellule d'indice « i » de la grille d'occupation, lesdites cellules étant ordonnées par distance croissante dudit capteur ;
- $P(o_i)$ est ladite valeur de probabilité d'occupation a priori de la cellule d'indice « i » de la grille d'occupation ;
- $p(z|o_i)$ est la densité de probabilité de la mesure « z » fournie par le capteur lorsque la cellule d'indice « i » de la grille d'occupation est occupée, fonction de $P(o_i)$ et du modèle direct du capteur ; et
- $p(z|v_i)$ est la densité de probabilité de la mesure « z » fournie par le capteur lorsque la cellule d'indice « i » de la grille d'occupation est vide, fonction de $P(o_i)$ et du modèle direct du capteur.

9. Procédé selon l'une des revendications précédentes dans lequel la probabilité d'occupation a priori est la même pour toutes les cellules de la grille d'occupation.

10. Système de perception de corps matériels comprenant :

- au moins un premier port d'entrée pour recevoir une pluralité de signaux ($z_1$, ..., $z_{NC}$) représentatifs de mesures de distance desdits corps matériels issues d'un ou plusieurs capteurs ;
- au moins un deuxième port d'entrée pour recevoir un signal représentatif d'au moins une valeur de probabilité d'occupation a priori des cellules d'une grille d'occupation, ou permettant son calcul ;
- un module de traitement de données (MTD1, MTD2) configuré pour recevoir en entrée lesdits signaux et les utiliser pour construire une grille d'occupation consolidée en appliquant un procédé selon l'une des revendications précédentes ; et
- au moins un port de sortie pour un signal ($g_{fus}$) représentatif de ladite grille d'occupation consolidée.

11. Système selon la revendication 10 comprenant également un dispositif d'interface utilisateur (IU) relié audit deuxième port d'entrée et adapté pour permettre à un utilisateur de choisir ladite ou au moins une dite valeur de probabilité d'occupation a priori.

12. Système selon la revendication 10 comprenant également un récepteur radio (RR) relié audit deuxième port d'entrée et adapté pour recevoir un signal radio (SPO) représentatif de ladite ou d'au moins une dite valeur de probabilité d'occupation a priori.

13. Système selon la revendication 10 comprenant également un système de positionnement spatial ou spatio-temporel (POS) relié audit deuxième port d'entrée et adapté pour générer une information de positionnement, ledit module de traitement de données étant adapté pour calculer ladite ou au moins une dite valeur de probabilité d'occupation a priori à partir de ladite information de positionnement.

14. Système selon la revendication 10 comprenant également un ou plusieurs capteurs ($C_{PO}$) reliés audit deuxième port d'entrée et adaptés pour générer un signal de présence desdits corps matériels.

15. Système selon l'une des revendications 10 à 14 comprenant également un ou plusieurs capteurs de distance ($C_1$, ..., $C_{NC}$) adaptés pour générer des signaux représentatifs d'une pluralité de mesures de distance desdits corps matériels et reliés audit ou auxdits ports d'entrée.

**Patentansprüche**

1. Verfahren zum Wahrnehmen von Materialkörpern (O), das die folgenden von einem Datenverarbeitungsmodul (MTD1, MTD2) ausgeführten Schritte beinhaltet:

a) Erfassen einer Mehrzahl von Abstandsmesswerten ($z_1$ ... $z_{NC}$) der Materialkörper von einem oder mehreren Sensoren ($C_1$ ... $C_{NC}$);
b) Erfassen, von einem Gerät außerhalb des Datenverarbeitungsmoduls, oder Berechnen, in Abhängigkeit von mindestens einem von außerhalb des Datenverarbeitungsmoduls empfangenen Signal (SPO), von mindestens einem A-priori-Belegungswahrscheinlichkeitswert der Zellen eines Belegungsgitters;

c) Anwenden, auf jeden Abstandsmesswert, eines inversen Modells des entsprechenden Sensors auf das Belegungsgitter (GO), das eine diskretisierte räumliche Darstellung einer Umgebung des Sensors bereitstellt, um eine Belegungswahrscheinlichkeit durch einen Materialkörper einer Menge von Zellen des Belegungsgitters zu bestimmen, wobei jedes inverse Sensormodell ein diskretes Modell ist, das mit jeder Zelle des entsprechenden Belegungsgitters und für jeden Abstandsmesswert eine Wahrscheinlichkeitsklasse assoziiert, die innerhalb einer selben Menge von endlicher Kardinalität ausgewählt wird, wobei jede Wahrscheinlichkeitsklasse durch einen ganzzahligen Index identifiziert wird, und

d) Konstruieren eines konsolidierten Belegungsgitters, von dem jede Zelle eine Belegungswahrscheinlichkeit aufweist, die durch Fusion der in Schritt c) geschätzten Belegungswahrscheinlichkeiten berechnet wird, wobei die Belegungswahrscheinlichkeit jeder Zelle des konsolidierten Belegungsgitters mittels ganzzahliger Berechnungen, die an den Indizes der in Schritt c) bestimmten Wahrscheinlichkeitsklassen durchgeführt werden, und als Funktion der oder einer A-priori-Belegungswahrscheinlichkeit bestimmt wird.

2. Verfahren nach Anspruch 1, wobei Schritt b) das Erfassen des oder mindestens eines A-priori-Belegungswahrscheinlichkeitswertes über ein Benutzeroberflächengerät (UI) umfasst.

3. Verfahren nach Anspruch 1, wobei Schritt b) das Erfassen des oder mindestens eines A-priori-Belegungswahrscheinlichkeitswertes über einen Funkempfänger (RR) umfasst.

4. Verfahren nach Anspruch 1, wobei Schritt b) das Empfangen eines von außen empfangenen Signals (SPO), das eine Dichte von Materialkörpern in einem Beobachtungsbereich des oder mindestens eines Sensors anzeigt, und das Berechnen des oder mindestens eines A-priori-Belegungswahrscheinlichkeitswertes in Abhängigkeit von der Dichte der Materialkörper umfasst.

5. Verfahren nach Anspruch 1, wobei Schritt b) das Berechnen des oder mindestens eines A-priori-Belegungswahrscheinlichkeitswertes in Abhängigkeit von mindestens einem Anwesenheitssignal der Materialkörper von einem oder mehreren anderen Sensoren ($C_{PO}$) als den zur Implementierung des Schritts a) verwendeten Sensoren umfasst.

6. Verfahren nach einem der vorherigen Ansprüche, wobei die Menge von endlicher Kardinalität von Wahrscheinlichkeitsklassen durch die Vereinigung einer oder mehrerer Teilmengen gebildet wird, so dass in Schritt d) die Fusion von zwei zur selben Teilmenge gehörenden Wahrscheinlichkeitsklassen ein Ergebnis liefert, das ebenfalls zu dieser Teilmenge gehört.

7. Verfahren nach einem der vorherigen Ansprüche, wobei die Menge von endlicher Kardinalität von Wahrscheinlichkeitsklassen, bezeichnet mit $G_p^{P(o)}$, eine ungleichmäßige Diskretisierung des Wahrscheinlichkeitsintervalls [0, 1] darstellt, mit einem Diskretisierungsschritt, der zwischen 0 und 0,5 zunimmt, dann zwischen 0,5 und 1 abnimmt und definiert ist durch: $G_p^{P(o)} = \{(p_n), n \in \mathbb{Z}\}$, wobei $\mathbb{Z}$ die Menge der relativen ganzen Zahlen ist und die Wahrscheinlichkeitsklassen $p_n$ wie folgt definiert sind:

$p_0 = P(o_i)$ ;
$p_1 = p$;
$p_{n+1} = F(p_n, p) \; \forall n > 1$

$$p_{-1} = \frac{P(o)^2(1-p)}{P(o)^2 + (1-2P(o))p};$$

$p_{n-1} = F(p_n, p_{-1}) \forall i < -1$

wobei $P(o_i)$ der A-priori-Belegungswahrscheinlichkeitswert der Zelle mit Index "i" des Belegungsgitters ist, p ein Parameter mit einem Wert strikt zwischen 0 und $1-P(o_i)$ ist und F eine Belegungswahrscheinlichkeits-Fusionsfunktion ist; und wobei in Schritt d) die Fusion zwischen zwei Wahrscheinlichkeitsklassen $p_l$, $p_j \in G_p^{P(o)}$ durch Anwenden der folgenden Gleichung berechnet wird: $F(p_n, p_m) = p_{n+m}$.

**8.** Verfahren nach einem der vorherigen Ansprüche, das auch einen Vorabschritt des Aufbaus von inversen Modellen von mindestens einem genannten Sensor auf dem entsprechenden Belegungsgitter beinhaltet, der durch Anwenden der folgenden Gleichung implementiert wird:

$$P(o_i|z) = \frac{p(z|o_i)P(o_i)}{p(z|o_i)P(o_i) + p(z|v_i)[1 - P(o_i)]}$$

worin:

- $P(o_i|z)$ die Belegungswahrscheinlichkeit der Zelle mit Index "i" des Belegungsgitters darstellt, wobei die Zellen nach zunehmendem Abstand des Sensors geordnet sind;
- $P(o_i)$ der A-priori-Belegungswahrscheinlichkeitswert der Zelle mit Index "i" des Belegungsgitters ist;
- $p(z|o_i)$ die Wahrscheinlichkeitsdichte des vom Sensor gelieferten Messwertes "z" ist, wenn die Zelle mit Index "i" des Belegungsgitters belegt ist, in Abhängigkeit von $P(o_i)$ und dem direkten Sensormodell; und
- $p(z|v_i)$ die Wahrscheinlichkeitsdichte des vom Sensor gelieferten Messwerts "z" ist, wenn die Zelle mit Index "i" des Belegungsgitters leer ist, in Abhängigkeit von $P(o_i)$ und dem direkten Sensormodell.

**9.** Verfahren nach einem der vorherigen Ansprüche, wobei die A-priori-Belegungswahrscheinlichkeit für alle Zellen des Belegungsgitters gleich ist.

**10.** System zur Wahrnehmung von Materialkörpern, das Folgendes umfasst:

- mindestens einen ersten Eingangsanschluss zum Empfangen einer Mehrzahl von Signalen ($z_1$, ..., $z_{NC}$), die für Abstandsmesswerte der Materialkörper von einem oder mehreren Sensoren repräsentativ sind;
- mindestens einen zweiten Eingangsanschluss zum Empfangen eines Signals, das für mindestens einen A-priori-Belegungswahrscheinlichkeitswert der Zellen eines Belegungsgitters repräsentativ ist oder dessen Berechnung ermöglicht;
- ein Datenverarbeitungsmodul (MTD1, MTD2), konfiguriert zum Empfangen der Signale am Eingang und zum Verwenden dieser Signale, um ein konsolidiertes Belegungsgitter durch Anwenden eines Verfahrens nach einem der vorherigen Ansprüche aufzubauen; und
- mindestens einen Ausgangsanschluss für ein Signal ($g_{fus}$), das das konsolidierte Belegungsgitter darstellt.

**11.** System nach Anspruch 10, das auch ein Benutzeroberflächengerät (UI) umfasst, das mit dem zweiten Eingangsanschluss verbunden und dafür ausgelegt ist, einem Benutzer die Auswahl des oder mindestens eines A-priori-Belegungswahrscheinlichkeitswertes zu ermöglichen.

**12.** System nach Anspruch 10, das auch einen Funkempfänger (RR) umfasst, der mit dem zweiten Eingangsanschluss verbunden und dafür ausgelegt ist, ein Funksignal (SPO) zu empfangen, das den oder mindestens einen A-priori-Belegungswahrscheinlichkeitswert darstellt.

**13.** System nach Anspruch 10, das auch ein räumliches oder räumlich-zeitliches Positionierungssystem (POS) umfasst, das mit dem zweiten Eingangsanschluss verbunden und dafür ausgelegt ist, eine Positionierungsinformation zu erzeugen, wobei das Datenverarbeitungsmodul zum Berechnen des oder mindestens eines A-priori-Belegungswahrscheinlichkeitswerts aus der Positionierungsinformation ausgelegt ist.

**14.** System nach Anspruch 10, das auch einen oder mehrere Sensoren ($C_{PO}$) umfasst, die mit dem zweiten Eingangsanschluss verbunden und zum Erzeugen eines Anwesenheitssignals der Materialkörper ausgelegt sind.

**15.** System nach einem der Ansprüche 10 bis 14, das auch einen oder mehrere Abstandssensoren ($C_1$, ..., $C_{NC}$) umfasst, die zum Erzeugen von Signalen ausgelegt sind, die für eine Mehrzahl von Abstandsmesswerten der Materialkörper repräsentativ und mit den ein oder mehreren Eingangsanschlüssen verbunden sind.

**EP 3 364 213 B1**

**Claims**

1. A method for perceiving physical bodies (O) having the following steps, implemented by a data processing module (MTD1, MTD2):

    a) acquisition of a plurality of distance measurements ($z_1 ... z_{NC}$) of said physical bodies arising from one or more sensors ($C_1 ... C_{NC}$);
    b) acquisition from a device outside of the data processing module, or computation on the basis of at least one signal (SPO) received from outside the data processing module, of at least one value of a priori probability of occupancy of the cells of an occupancy grid;
    c) application, to each said distance measurement, of an inverse model of the corresponding sensor on said occupancy grid (GO) providing a discretized spatial representation of an environment of said sensor, so as to determine a probability of occupancy by a physical body of a set of cells of said occupancy grid, each said inverse sensor model being a discrete model, associating with each cell of the corresponding occupancy grid, and for each distance measurement, a probability class chosen inside one and the same set of finite cardinality, each said probability class being identified by an integer index; and
    d) construction of a consolidated occupancy grid each cell of which exhibits an occupancy probability computed by fusing the occupancy probabilities estimated during step c), the probability of occupancy of each cell of the consolidated occupancy grid being determined by means of integer computations performed on the indices of the probability classes determined during said step c), and as a function of said or of a said a priori occupancy probability.

2. The method according to claim 1, wherein said step b) comprises the acquisition of said or of at least one said value of a priori occupancy probability by way of a user interface device (IU).

3. The method according to claim 1, wherein said step b) comprises the acquisition of said or of at least one said value of a priori occupancy probability by way of a radio receiver (RR).

4. The method according to claim 1, wherein said step b) comprises the reception of a said signal (SST) received from outside indicative of a density of physical bodies in a region of observation of said or of at least one said sensor, and the computation of said or of at least one said value of a priori occupancy probability on the basis of said density of physical bodies.

5. The method according to claim 1, wherein said step b) comprises the computation of said or of at least one said value of a priori occupancy probability on the basis of at least one signal of presence of said physical bodies arising from one or more sensors ($C_{PO}$) other than the sensors used to implement said step a).

6. The method according to one of the preceding claims, wherein said set of finite cardinality of probability classes is formed by the union of one or more subsets such that, during said step d), the fusion of two probability classes belonging to one and the same subset provides a result also belonging to said subset.

7. The method according to one of the preceding claims, wherein said set of finite cardinality of probability classes, designated by $\bar{G}_p^{P(o)}$, constitutes a nonuniform discretization of the probability interval [0, 1], with a discretization spacing increasing between 0 and 0.5, and then decreasing between 0.5 and 1 and is defined by: $\tilde{G}_p^{P(o)} = \{(p_n), n \in \mathbb{Z}\}$, $\mathbb{Z}$ being the set of relative integers, the probability classes $p_n$ being defined in the following manner:

    $p_0 = P(o_i)$ ;
    $p_1 = p$ ;
    $p_{n+1} = F(p_n, p) \ \forall n > 1$

17

$$p_{-1} = \frac{P(o)^2(1-p)}{P(o)^2+(1-2P(o))p};$$

$p_{n-1}=F(p_n, p_{-1}) \forall i<-1$

where $P(o_i)$ is the value of a priori probability of occupancy of the cell of index "i" of the occupancy grid, p a parameter of value lying strictly between 0 and $1-P(o_i)$ and F an occupancy probability fusion function; and wherein, during said step d), the fusion between two probability classes $p_i$, $p_j \in G_p^{P(o)}$ is computed by applying the following equation: $F(p_n, p_m)=p_{n+m}$

8. The method according to one of the preceding claims also having a preliminary step of constructing the inverse models of at least one said sensor on the corresponding occupancy grid, implemented by applying the following equation:

$$P(o_i|z) = \frac{p(z|o_i)P(o_i)}{p(z|o_i)P(o_i) + p(z|v_i)[1 - P(o_i)]}$$

where:

- $P(o_i|z)$ represents the probability of occupancy of the cell of index "i" of the occupancy grid, said cells being ordered by increasing distance of said sensor;
- $P(o_i)$ is said value of a priori probability of occupancy of the cell of index "i" of the occupancy grid;
- $p(z|o_i)$ is the probability density of the measurement "z" provided by the sensor when the cell of index "i" of the occupancy grid is occupied, a function of $P(o_i)$ and of the direct model of the sensor; and
- $p(z|v_i)$ is the probability density of the measurement "z" provided by the sensor when the cell of index "i" of the occupancy grid is vacant, a function of $P(o_i)$ and of the direct model of the sensor.

9. The method according to one of the preceding claims, wherein the a priori occupancy probability is the same for all the cells of the occupancy grid.

10. A system for perceiving physical bodies comprising:

- at least one first input port for receiving a plurality of signals ($z_1$, ..., $z_{NC}$) representative of distance measurements of said physical bodies arising from one or more sensors;
- at least one second input port for receiving a signal representative of at least one value of a priori probability of occupancy of the cells of an occupancy grid, or allowing its computation;
- a data processing module (MTD1, MTD2) configured to receive as input said signals and to use them to construct a consolidated occupancy grid by applying a method according to one of the preceding claims; and
- at least one output port for a signal ($g_{fus}$) representative of said consolidated occupancy grid.

11. The system according to claim 10, also comprising a user interface device (IU) linked to said second input port and adapted to allow a user to choose said or at least one said value of a priori occupancy probability.

12. The system according to claim 10, also comprising a radio receiver (RR) linked to said second input port and adapted to receive a radio signal (SPO) representative of said or of at least one said value of a priori occupancy probability.

13. The system according to claim 10, also comprising a spatial or spatio-temporal positioning system (POS) linked to said second input port and adapted to generate a positioning item of information, said data processing module being adapted to compute said or at least one said value of a priori occupancy probability on the basis of said positioning item of information.

14. The system according to claim 10, also comprising one or more sensors ($C_{PO}$) linked to said second input port and adapted to generate a signal of presence of said physical bodies.

15. The system according to one of claims 10 to 14, also comprising one or more distance sensors ($C_1$, ..., $C_{NC}$) adapted to generate signals representative of a plurality of distance measurements of said physical bodies and linked to said input port or ports.

p(z/d)

FIG.1

FIG.2

P(o/z)

FIG.3

P(o/z)

FIG.4

FIG.5A

FIG.5B

FIG.5C

FIG.5D

P(o)=0.5

P(o)=0.8

P(o)=0.2

●P(o)=0.2  ●P(o)=0.8  ○P(o)=0.5

FIG.6A

$\times$ p = 0,7 ● p = 0,55 + p = 0,52

## FIG.6B

## FIG.7A

FIG.7B

FIG.8A

FIG.8B

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014035775 A
- FR 2006050860
- DE 102009007395
- FR 1558919
- EP 2016072530 W
- WO 2013087067 A

**Littérature non-brevet citée dans la description**

- **A. ELFES.** Occupancy grids: a stochastic spatial représentation for active robot perception. *Sixth Conférence on Uncertainty in AI,* 1990
- **K. KONOLIGE.** Improved occupancy grids for map building. *Autonomous Robots,* 1997, vol. 4, 351-367
- **J. ADARVE et al.** Computing occupancy grids from multiple sensors using linear opinion pools. *Proceedings - IEEE International Conférence on Robotics and Automation,* 2012
- **T. RAKOTOVAO et al.** Real-time power-efficient intégration of multi-sensor occupancy grid on many core. *2015 International Workshop on Advanced Robotics and its Social Impact,* 30 Juin 2015
- **E. KAUFMAN et al.** Bayesian Occupancy Grid Mapping via an Exact Inverse Sensor Model. *American Control Conférence - ACC,* 08 Juillet 2016, 5709-5716
- **T. RAKOTOVAO et al.** Multi-Sensor Fusion of Occupancy Grids based on Integer Arithmetic. *2016 IEEE International Conférence on Robotics and Automation - ICRA, Stockholm,* 16 Mai 2016, 1854-1859